Europäisches Patentamt

European Patent Office

Office européen des brevets

(19)

(11) Numéro de publication: **0 335 760
B1**

# FASCICULE DE BREVET EUROPEEN

(12)

(45) Date de publication du fascicule du brevet:
**12.09.90**

(21) Numéro de dépôt: **89400599.0**

(22) Date de dépôt: **03.03.89**

(51) Int. Cl.⁵: **B01D 63/02,** B01D 63/04

(54) **Procédé de fabrication d'une plaque tubulaire pour appareil de séparation à fibres creuses, et dispositifs obtenus.**

(30) Priorité: **29.03.88 FR 8804067**

(43) Date de publication de la demande:
**04.10.89 Bulletin 89/40**

(45) Mention de la délivrance du brevet:
**12.09.90 Bulletin 90/37**

(84) Etats contractants désignés:
**AT BE CH DE ES FR GB GR IT LI NL SE**

(56) Documents cités:
**DD-A- 129 043
FR-A- 1 471 991
GB-A- 2 011 274**

**PATENT ABSTRACTS OF JAPAN, vol. 12, no. 5 (C-467)
(2852), 08.01.1988
PATENT ABSTRACT OF JAPAN, vol. 11, no. 176 (C-426)
(2623), 05.06.1987**

(73) Titulaire: **LYONNAISE DES EAUX Société Anonyme,
52 rue de Lisbonne, F-75008 Paris(FR)**

(72) Inventeur: **Aptel, Philippe, 22 rue Johann Strauss,
F-31400 Toulouse(FR)**
Inventeur: **Liou, Jun Kong, 137 Chemin de la Sereine,
F-01700 Beynost(FR)**

(74) Mandataire: **Cournarie, Michèle et al, Office
Blétry 2, boulevard de Strasbourg, F-75010 Paris(FR)**

## Description

L'invention concerne un procédé de fabrication d'une plaque tubulaire pour appareil de séparation à fibres creuses, et les dispositifs obtenus par ce procédé.

Dans de nombreux dispositifs de séparation par perméation sur membrane (micro filtration, ultrafiltration, osmose inverse, perméation gazeuse, dialyse, pervaporation...), la membrane se présente sous forme de fibres creuses réunies en faisceau ordonné ou non dont au moins une extrémité est ennoyée dans un support de résine nommé plaque tubulaire. Le faisceau de fibres a le plus souvent au départ la forme d'un écheveau dont au moins une extrémité est ennoyée dans de la résine et qui est transformé en faisceau lors de l'opération suivante de mise en communication des fibres creuses avec l'extérieur, dans laquelle on tranche la plaque tubulaire ou bien on coupe les boucles de fibres qui dépassent. Pour donner la résistance nécessaire à la plaque, et en particulier résister aux différences de pression qui s'exercent entre les deux faces de la plaque tubulaire, il faut augmenter son épaisseur ce qui entraîne une neutralisation correspondante de la longueur utile de fibres , ou lui adjoindre des dispositifs de renfort dont un certain nombre sont connus.

Par ailleurs, le document FR- 2 380 051 décrit une plaque tubulaire percée d'un réseau de passages perpendiculaires aux fibres. Cette technique exige une étape de perçage des passages après fabrication de la plaque tubulaire.

L'invention selon la présente demande fournit un procédé de fabrication d'une plaque tubulaire pour appareil de séparation à fibres creuses, à partir d'un ensemble de fibres creuses dont l'extrémité est enrobée dans une résine, qui permet de renforcer la plaque tubulaire de façon simple et efficace, sans étapes supplémentaires de perçage de la résine.

Le procédé selon l'invention consiste à subdiviser l'ensemble de fibres creuses en plusieurs faisceaux élémentaires, avantageusement sous forme d'écheveaux, à enfermer chaque faisceau élémentaire au moins à une première extrémité dans un manchon de renfort, à noyer à cette première extrémité les fibres et les manchons dans une résine pour former une plaque tubulaire renforcée.

Selon un mode de réalisation avantageux, les éléments de renfort se prolongent sur toute la longueur desdits faisceaux élémentaires jusqu'à leur deuxième extrémité qui peut être encollée pour former une deuxième plaque tubulaire renforcée.

L'invention fournit également une plaque tubulaire pour appareil de séparation à fibres creuses, formée par encollage de l'extrémité d'un faisceau de fibres creuses à l'aide d'une résine durcissable, comportant des manchons de renfort noyés dans la résine entourant l'extrémité de faisceaux élémentaire qui constituent le faisceau de fibres creuses.

Il est également fourni par l'invention un dispositif de séparation par fibres creuses selon l'une des revendications 7 à 9.

Les manchons de renfort sont de préférence des manchons perforés de section droite circulaire ou polygonale.

D'autres caractéristiques et avantages apparaîtront à la lecture de la description détaillée suivante, faite en référence aux dessins annexés dans lesquels :

la figure 1 est une vue de dessus d'un mode de réalisation de plaque tubulaire selon l'invention.

La figure 2 est une vue de côté, partiellement en coupe, d'un dispositif de séparation selon l'invention.

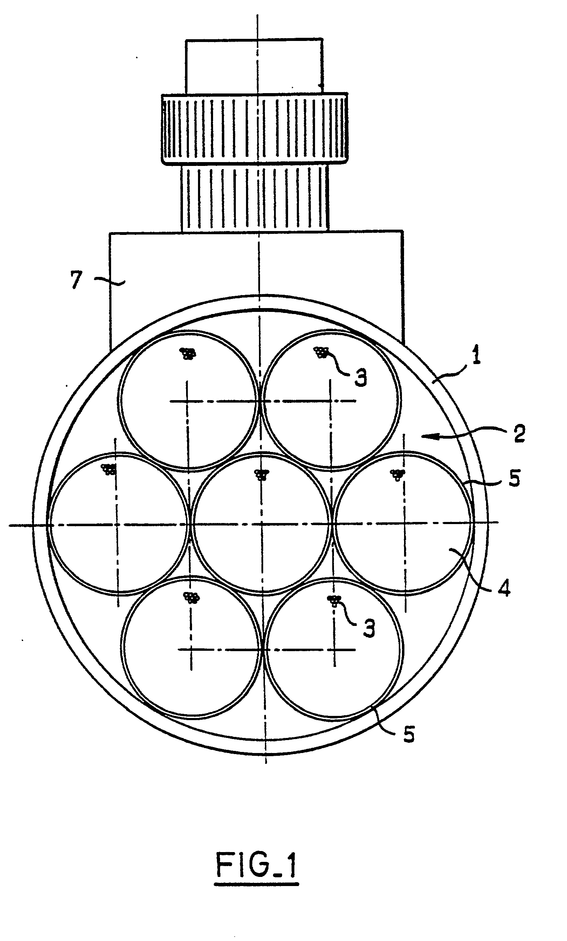

La figure 1 est une vue de dessus de la plaque tubulaire selon un mode de réalisation de l'invention qui n'est bien entendu pas limitée à ce seul mode de réalisation représenté.

De façon classique que l'on décrira sans entrer dans les détails, l'ensemble constitué par les fibres et la ou les plaques tubulaires est monté dans une enveloppe généralement cylindrique dans laquelle on introduit le fluide à traiter soit pour qu'il passe de l'extérieur vers l'intérieur des fibres en sortant purifié au-delà de la plaque tubulaire de sortie soit pour qu'il passe de l'intérieur vers l'extérieur des fibres en sortant purifié entre la plaque tubulaire d'entrée et l'autre extrémité qui peut ou non être une plaque tubulaire.

Sur la figure 1, l'enveloppe 1 contient une plaque tubulaire 2 constituée par une résine, par exemple une résine époxy, qui encolle les extrémités de fibres creuses 3. Au lieu d'avoir un seul faisceau de fibres provenant de la découpe à ses extrémités d'un seul écheveau de fibres, la plaque tubulaire selon la présente invention contient plusieurs faisceaux élémentaires 4 de fibres 3 (seules quelques fibres sont représentées pour ne pas obscurcir la figure) distincts les uns des autres et matérialisés par des éléments de renfort 5 qui les entourent. Les manchons de renfort 5 sont ici de section droite circulaire, et au nombre de sept, ce qui permet de les disposer de manière relativement compacte. Une autre section, par exemple polygonale et en particulier hexagonale ou octogonale pour faciliter la disposition relativement compacte, peut bien entendu être envisagée.

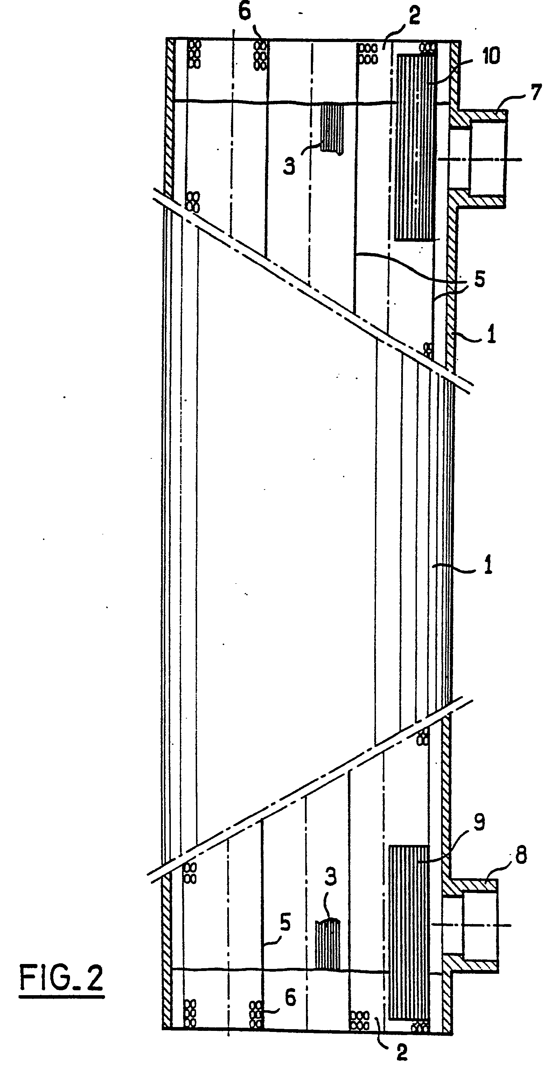

Les manchons de renfort 5, qui seront décrits ci-après comme étant de section circulaire pour des raisons de commodité, sont des manchons perforés entourant les extrémités des faisceaux de fibres et réalisés sous forme de grilles, grillages ou treillis en matériau suffisamment rigide pour obtenir la résistance souhaitée (métal, matière plastique par exemple). Une forme particulièrement avantageuse est celle schématiquement représentée à la figure 2 : il s'agit d'un cylindre perforé régulièrement de trous 6 rapprochés, de forme quelconque, par exemple circulaire. L'ouverture, la forme, la répartition, le nombre et la taille des mailles sont déterminés selon le débit et la distribution des écoulements souhaités. L'écartement des mailles ou trous est calculé de façon à laisser au manchon la rigidité nécessaire.

Ces manchons constituent un moyen très simple permettant d'éviter toute déformation de la plaque tubulaire sous l'effet de la différence de pression entre les deux faces de la plaque.

Selon un mode de réalisation particulièrement avantageux, les manchons ennoyés dans la plaque tubulaire de sortie se prolongent au-delà de celle-ci sur toute la longueur des faisceaux élémentaires jusqu'à leur deuxième extrémité qui est encollée pour former une deuxième plaque tubulaire. C'est ce qui est représenté sur la figure 2, sur laquelle une enveloppe 1 contient plusieurs manchons ou éléments de renfort 5 perforés de trous 6 entourant plusieurs faisceaux élémentaires de fibres 3 qui se terminent à chaque extrémité par une plaque tubulaire.

Dans ce cas les deux plaques tubulaires ainsi reliées par les éléments de renfort peuvent mieux résister aux efforts de compression ou de traction auxquels elles sont soumises du fait de la différence de pression existant entre l'intérieur et l'extérieur de l'enveloppe.

En outre une telle disposition facilite la mise en place des fibres creuses dans l'enveloppe et l'écoulement du fluide à l'extérieur des fibres, qui n'a plus à se frayer un chemin tortueux entre les fibres, mais qui circule librement dans les espaces entre les manchons 5, ce qui diminue notablement les pertes de charge.

L'enveloppe 1 est raccordée au réseau du fluide à traiter soit par ses extrémités, soit par une canalisation d'entrée 8 et/ou une canalisation de sortie 7; quelle qui soit la disposition adoptée, la présence de manchons divisant l'ensemble de fibres creuses permet une meilleure répartition du fluide puisqu'il existe des passages libres entre les manchons. En outre le fait d'avoir un assemblage de plusieurs faisceaux ménage des espaces libres à la périphérie interne de l'enveloppe qui permettent, en choisissant convenablement les diamètres respectifs des manchons et de l'enveloppe, de mettre en place les entrées/sorties de fluide en facilitant les écoulements et en évitant des pertes de charge excessives. De plus on peut prévoir des baffles 9 au droit de ces entrées/sorties pour protéger localement le faisceau des forces hydrauliques provoquées par la restriction de ces entrées/sorties.

Sur l'exemple de la figure 2, un baffle 9 est prévu au droit de la canalisation d'entrée 8, et un baffle 10 est prévu au droit de la conduite de sortie 7, essentiellement pour protéger le faisceau.

A titre purement illustratif, le dispositif représenté sur la figure 2 présente les caractéristiques suivantes :

| Enveloppe 1. | |
|---|---|
| Diamètre extérieur . | 250 mm |
| Diamètre intérieur | 240 mm |
| Longueur | 1,3 m |
| Manchons perforés 5 | |
| Diamètre extérieur | 80 mm |
| Diamètre intérieur | 75 mm |
| Ouverture de maille | 4 mm |
| Nombre de faisceaux élémentaires | 7 |
| Surface de filtration | 40 m$^2$ |

Dans le cas où le fluide à traiter passe de l'extérieur à l'intérieur des fibres, les manchons perforés peuvent également servir de support à un préfiltre (type filtre à bougie) qui permet d'effectuer une préfiltration.

Selon un autre mode de réalisation, un dispositif de séparation peut être constitué par plusieurs faisceaux de fibres creuses attachées à un montant rigide (tige ou barre) qui est fixé aux deux manchons de chaque faisceau élémentaire et maintient leur écartement. Le faisceau est maintenu attaché au montant par exemple par un ruban ou un tissu enroulé en spirale de manière à individualiser chaque faisceau.

Pour préparer une plaque tubulaire selon l'invention, on prépare plusieurs écheveaux de fibres creuses de faible diamètre par rapport aux écheveaux habituellement utilisés de façon à subdiviser l'ensemble de fibres creuses en plusieurs faisceaux élémentaires, on enfile un manchon perforé au moins à une des extrémités de chaque écheveau, on dispose les manchons selon la configuration voulue afin de procéder à l'encollage avec une résine appropriée.

Lorsque les manchons se prolongent sur toute la longueur des faisceaux élémentaires ou sont réunis par un montant, on procède également à l'encollage de la deuxième extrémité des manchons perforés.

L'encollage peut se faire par exemple par empotage de l'extrémité des faisceaux dans un moule ou par application de résine par centrifugation. Chaque extrémité de faisceau et son manchon peuvent être encollés individuellement, essentiellement pour les tester avant l'assemblage final, et réunis par un second encollage aux autres faisceaux et manchons. Il est également envisageable de prévoir un montage non définitif des manchons dans la plaque tubulaire afin de permettre leur démontage pour entretien par exemple.

L'utilisation de manchons perforés dans la plaque tubulaire permet un bon ancrage des manchons dans la résine, puisque celle-ci passe par les perforations et assure une liaison intime. En outre la subdivision des fibres en plusieurs faisceaux facilite également la pénétration de la résine pendant l'encollage.

De plus l'utilisation de plusieurs écheveaux de moindre diamètre, qui ont de ce fait un plus faible rayon de courbure aux extrémités, diminue également la perte de matériau au cours de la fabrication, due à la partie des fibres qui est coupée.

## Revendications

1. - Procédé de fabrication d'une plaque tubulaire pour appareil de séparation à fibres creuses, à partir d'un ensemble de fibres creuses dont l'extrémité est enrobée dans une résine, caractérisé en ce qu'on subdivise l'ensemble de fibres creuses en plusieurs faisceaux élémentaires (4), on enferme chaque faisceau élémentaire au moins à une première extrémité dans un manchon de renfort (5), et on noie à cette première extrémité les fibres et les manchons de renfort (5) dans une résine pour former une plaque tubulaire (2) renforcée.

2. - Procédé selon la revendication 1, caractérisé en ce que lesdits manchons de renfort (5) se prolongent sur toute la longueur desdits faisceaux élémentaires (4) jusqu'à leur deuxième extrémité que l'on noie dans une résine pour former une deuxième plaque tubulaire.

3. - Procédé selon l'une ou l'autre des revendications 1 et 2, caractérisé en ce que lesdits manchons de renfort sont des manchons perforés de section droite circulaire ou polygonale.

4. - Plaque tubulaire pour appareil de séparation à fibres creuses, formée par encollage de l'extrémité d'un faisceau de fibres creuses à l'aide d'une résine durcissable, caractérisée en ce qu'elle comporte des manchons de renfort (5) noyés dans la résine, entourant l'extrémité de plusieurs faisceaux élémentaires (4) constituant le faisceau de fibres creuses (3).

5. - Plaque tubulaire selon la revendication 4, caractérisée en ce que les manchons de renfort sont des manchons perforés de section droite circulaire ou polygonale.

6. - Plaque tubulaire selon la revendication 4 ou 5, caractérisée en ce que les manchons se prolongent au-delà de la plaque tubulaire, sur toute la longueur des faisceaux des fibres creuses.

7. - Dispositif de séparation par fibres creuses, caractérisée en ce qu'il comporte à chaque extrémité du faisceau de fibres creuses, une plaque tubulaire selon l'une quelconque des revendications 4 à 5.

8. - Dispositif de séparation par fibres creuses, caractérisé en ce qu'il comporte à chaque extrémité du faisceau de fibres creuses une plaque tubulaire selon l'une quelconque des revendications 4 et 5, les fibres creuses étant attachées à des montants rigides reliant les deux manchons de chaque faisceau élémentaire de fibres creuses.

## Patentansprüche

1. Verfahren zur Herstellung einer Rohrverschlußplatte für eine Hohlfasern-Trennvorrichtung, ausgehend von einem Satz von Hohlfasern, dessen Ende in Harz eingebettet ist, dadurch gekennzeichnet, daß man den Satz von Hohlfasern in mehrere Elementarbündel (4) unterteilt, jedes Elementarbündel mindestens an einem ersten Ende in eine Verstärkungshülse (5) einschließt, und an diesem ersten Ende die Fasern und die Verstärkungshülse (5) zur Bildung einer verstärkten Rohrverschlußplatte (2) in Harz taucht.

2. Verfahren nach Anspruch 1, dadurch gekennzeichnet, daß die Verstärkungshülsen (5) sich über die gesamte Länge der Elementarbündel (4) bis zu deren zweitem Ende ausdehnen, welches man zur Bildung einer zweiten Rohrverschlußplatte in Harz taucht.

3. Verfahren nach dem einen oder anderem der Ansprüche 1 und 2, dadurch gekennzeichnet, daß die Verstärkungshülsen perforierte Hülsen mit kreisförmigem oder polygonalem Querschnitt sind.

4. Rohrverschlußplatte für eine Hohlfaser-Trennvorrichtung, gebildet durch Beleimung des Endes eines Hohlfaserbündels mittels eines härtbaren Harzes, dadurch gekennzeichnet, daß sie in das Harz getauchte Verstärkungshülsen (5) umfaßt, die das Ende von mehreren Elementarbündeln (4) umgeben, welche das Hohlfaserbündel (3) bilden.

5. Rohrverschlußplatte nach Anspruch 4, dadurch gekennzeichnet, daß die Verstärkungshülsen perforierte Hülsen mit kreisförmigem oder polygonalem Querschnitt sind.

6. Rohrverschlußplatte nach Anspruch 4 oder 5, dadurch gekennzeichnet, daß sich die Hülsen über die Rohrverschlußplatte hinaus über die gesamte Länge der Hohlfaserbündel erstrecken.

7. Hohlfaser-Trennvorrichtung, dadurch gekennzeichnet, daß sie an jedem Ende des Hohlfaserbündels eine Rohrverschlußplatte nach einem der Ansprüche 4 bis 5 umfaßt.

8. Hohlfaser-Trennvorrichtung, dadurch gekennzeichnet, daß sie an jedem Ende des Hohlfaserbündels eine Rohrverschlußplatte nach einem der Ansprüche 4 und 5 umfaßt, wobei die Hohlfasern mit starren Trägerteilen verbunden sind, welche die beiden Hülsen jedes Hohlfaser-Elementarbündels verbinden.

## Claims

1. A method for manufacturing a tubular plate for a hollow-fibre separation apparatus, based on a set of hollow fibres the end of which is coated with a resin, characterised in that the set of hollow fibres is subdivided into several elementary bundles (4), each elementary bundle is enclosed, at least at a first end, in a reinforcing sleeve (5), and the fibres and the reinforcing sleeves (5) are immersed at this first end in a resin in order to form a reinforced tubular plate (2).

2. A method according to Claim 1, characterised in that the said reinforcing sleeves (5) extend over the whole length of the said elementary bundles (4) as far as their second end which is immersed in a resin to form a second tubular plate.

3. A method according to either of Claims 1 and 2, characterised in that the said reinforcing sleeves are perforated sleeves having circular or polygonal cross-section.

4. A tubular plate for a hollow-fibre separation apparatus, formed by gluing the end of a bundle of hollow fibres by means of a hardenable resin, characterised in that it has reinforcing sleeves (5) immersed in the resin, surrounding the end of several elementary bundles (4) which form the bundle of hollow fibres (3).

5. A tubular plate according to Claim 4, characterised in that the reinforcing sleeves are perforated sleeves having circular or polygonal cross-section.

6. A tubular plate according to Claim 4 or 5, characterised in that the sleeves extend beyond the tubular plate over the whole length of the bundles of hollow fibres.

7. A device for separating by hollow fibres, characterised in that it has at each end of the bundle of hollow fibres a tubular plate according to any one of Claims 4 to 5.

8. A device for separating by hollow fibres, characterised in that it has at each end of the bundle of hollow fibres a tubular plate according to either of Claims 4 and 5, the hollow fibres being attached to rigid uprights joining the two sleeves of each elementary bundle of hollow fibres.

FIG_1

FIG. 2